# EUROPEAN PATENT APPLICATION

(11) **EP 0 992 889 A1**
(43) Date of publication of application: **12.04.2000**
(21) Application number: 98402461.2
(22) Date of filing: 06.10.1998
(51) Int. Cl.: G06F 9/32

(54) **Interrupt processing during iterative instruction execution**

(71) Applicant: TEXAS INSTRUMENTS INC., Dallas, Texas 75243 (US); TEXAS INSTRUMENTS FRANCE, 06271 Villeneuve Loubet Cédex (FR)
(72) Inventor: Ponsot, Eric, 347 route de Cagnes 06140 Vence (FR); Djafarian, Karim, Batiment B1 06140 Vence (FR); Couvrat, Marc, 06700 Saint Laurent du Var (FR)
(74) Representative: Potter, Julian Mark

(57) **Abstract**

A processing engine comprises an instruction decode register adapted to buffer a complete instruction pending decode thereof, and a decode mechanism configured to decode instructions. The processing engine is responsive to a repeat instruction to repeat execution of a subsequent instruction and further responsive to an interrupt signal to interrupt said repeat execution of said subsequent instruction.

## Description

### FIELD OF INVENTION

The present invention relates to processing engines, and in particular but not exclusively, to processing engines configured to repeat program flow.

### BACKGROUND OF INVENTION

Many different types of processing engine are known, of which microprocessors are but one example. For example, Digital Signal Processors (DSPs) are widely used, in particular for specific applications. DSPs are typically configured to optimise the performance of the applications concerned and to achieve this they employ more specialised execution units and instruction sets. They have not, however, been provided with the parallel instruction execution architectures found in microprocessors and do not operate under the operating systems used to control such microprocessors.

In a DSP or microprocessor for example, machine-readable instructions stored in a program memory are sequentially executed by the processing engine in order for the processing engine to perform operations or functions. The sequence of machine-readable instructions is termed a "program". Although the program instructions are typically performed sequentially, certain instructions permit the program sequence to be broken, and for the program flow to "Branch" or "Jump" to another part of the program, where sequential program flow re-starts. Often the later program sequence includes an instruction which "Returns" the program flow to the original program sequence.

The program portion terminated by the "Return" is often termed a "sub-routine", and Branching or Jumping to a " sub-routine" is referred to as "Calling" a sub-routine. In this way, often used functions or tasks do not need to be included throughout a program, but instead may be coded once as a sub-routine and called from the main program as necessary.

Sub-routines are often called in response to an interrupt request received by the processing engine in order to service the interrupt.

It is often also desirable to repeat instructions within a program. Such repetition is known as "looping" or "iteration". In particular instances it is desirable to repeat a single instruction using a repeat loop.

In known processing engines instruction registers are only sixteen bits long. Long instruction words taking multiple processor cycles to execute cannot completely fit into such instruction registers. In order to decode and execute them, the long instruction is split into sections of 16 bits or less and decoded and executed separately. Typically, the separate parts of the instruction are passed to different registers within the processing engine. For example, an op-code may be passed to an instruction decode register from where the op-code is decoded, whilst an operand for the op-code may be passed to another register such as a data register or accumulator.

Such long instructions can be repeated as a single instruction repeat. However, the op-code need only be decoded once, ie during the first pass of the loop, whilst the operand is up-dated as appropriate for each pass of the loop.

On receiving an interrupt request, the processing engine needs to save a lot of information regarding the location, status and current value of the separate sections of the repeated instruction to a stack register or the like, in order to reliably return from servicing the interrupt. The volume of data that it is necessary to store for conventional processing engines having short instruction registers is such so as to make the processing and storage overhead uneconomic or unviable. Thus, servicing of interrupts is inhibited during a single instruction repeat loop.

However, it is necessary to service interrupts within a reasonable time period after they occur. Hence, in known processing engines a repeat loop is set-up in sections of 10 or 100 repeats for example. Gaps between each repeat section provide an opportunity for the processing engine to service any interrupts that may have occurred during the repeat section

The present invention is directed to improving the performance of processing engine such as, for example but not exclusively, digital signal processors.

### SUMMARY OF INVENTION

Particular and preferred aspects of the invention are set out in the accompanying independent and dependent claims. Combinations of features from the dependent claims may be combined with features of the independent claims as appropriate and not merely as explicitly set out in the claims.

In accordance with a first aspect of the invention there is provided a processing engine comprising an instruction decode register adapted to buffer a complete instruction pending decode thereof. The processing engine also comprises a decode mechanism configured to decode instructions. The processing engine is responsive to a repeat instruction to repeat the execution of a subsequent instruction, and is further responsive to a signal to interrupt said repeat execution of said subsequent instruction.

In a second aspect in accordance with the invention, there is provided a method for operating a processing engine including an instruction decode register. The method comprises (i) repeatedly executing an instruction wholly disposed in said instruction register, (ii) interrupting said second repeated execution, (iii) loading said instruction register with another instruction, and (iv) executing said another instruction.

An advantage of a preferred embodiment in accordance with the first or second aspects of the invention is that interruption of a repeat loop for a single instruction may occur without the need to store large amounts of context information. Additionally, complete or whole instructions fit into the instruction decode register thereby facilitating repeat execution of single instructions comprising multi-cycle instructions or two instructions executable in parallel, for example. Such a multi-cycle instruction may for example comprise a long offset modifier (16 bits), absolute address (e.g. 24 bits) or a single memory instruction to add a constant to the contents of the memory location and store the result in the same memory location. This would comprise a memory read cycle first, and on the next cycle execution of the arithmetic operation and writing the result to the single memory location. This would only take two cycles since there is no need to re-compute the address.

A further advantage of preferred embodiments in accordance with the first or second aspects of the invention is that there is no need to limit the size of the repeat loop, in order to provide for opportunities to service interrupt requests. Additionally, they reduce interrupt service latency.

Preferably the processing engine is responsive to the signal to interrupt the decode mechanism, but is configured to complete a current decode operation prior to disablement.

Typically a processing engine comprises a program counter for pointing to a program memory location corresponding to a next instruction to be decoded. Such processing engines also provide a memory area for storing a value located in said program counter during an interrupt. The same memory, or a different memory, is usually provided for storing context information associated with the next or subsequent instruction. This provides for storage of relevant information such as the location in program memory of the next instruction during the interrupt in order to facilitate return to the appropriate part in the program sequence once the interrupt has been serviced.

It is desirable that the value of the program counter and context information can be stored quickly, and to this end processing engines generally provide a register, often embedded on a processing core for the processing engine, to which such information may be stored. Preferably, the total number of bits of context data and program counter data do nt exceed the data bandwidth of the stack register, thus enabling context/program counter data to be pused to the stack in a single processor cycle.

There is generally provided interrupt control mechanisms which are responsive to an interrupt request signal to initiate signals for interrupting the repeat execution. Such interrupt control mechanisms are used for setting an interrupt flag within the processing engine to indicate that an interrupt request has been received. Additionally, the interrupt control mechanisms typically determine the nature of an interrupt request and arrange for calling a corresponding program sub-routine to service the interrupt.

Suitably, embodiments of the invention are within integrated circuits, typically within a digital signal processor or the like. This is particularly suitable applications for inclusion within electronic apparatus, and in the case of digital signal processors in telecommunications apparatus.

In accordance with the preferred embodiments of the invention, it is possible to relatively easily interrupt the single repeat processes compared to the prior art, where such interrupts would have to be separately coded. Consequently, there is no need to halt repeats to determine if any interrupts have occurred during the repeat loop which reduces processor cycles for performing such loops. Thus, there is a corresponding reduction in power consumption by the processing engine, and in the code size. Therefore, embodiments of the invention are particularly suitable for use in portable apparatus, such as wireless communication devices. Typically, such a wireless communication device comprises a user interface including a display such as liquid crystal display or a TFT display, and a keypad or keyboard for inputting data to the communications device. Additionally, a wireless communication device will also comprise a transceiver and an antenna for wireless communication with a radio telephone network or the like.

Further aspects and advantages of the invention will become apparent from the following description.

### BRIEF DESCRIPTION OF THE DRAWINGS

Particular embodiments in accordance with the invention will now be described, by way of example only, and with reference to the accompanying drawings in which like reference signs are used to denote like parts unless otherwise stated, and in which:
Figure 1 is a schematic block diagram of a processor in accordance with an embodiment of the invention;
Figure 2 is a schematic diagram of a core of the processor of Figure 1;
Figure 3 is a more detailed schematic block diagram of various execution units of the core of the processor of Figure 1;
Figure 4 is schematic diagram of an instruction buffer queue and an instruction decoder controller of the processor of Figure 1;
Figure 5 is a representation of pipeline phases of the processor of Figure 1;
Figure 6 is a diagrammatic illustration of an example of operation of a pipeline in the processor of Figure 1;
Figure 7 is a schematic representation of the core of the processor for explaining the operation of the pipeline of the processor of Figure 1; Memory Interface Unit ;
Figure 8 is a schematic illustration of a known processing engine;
Figure 9 is a schematic illustration of a preferred embodiment of the invention;
Figure 10 is a schematic illustration of memory organised for stiring interrupt sub-routine addresses and interrupt sub-routines;
Figure 11 diagrammatically illustrates the (a) pipeline stages of an interrupted single repeat instruction in accordance with an embodiment of the invention, and (b) register contents corresponding to the pipeline stages of an interrupted single repeated instruction and synchronised to an interrupt signal, in accordance with an embodiment of the invention;
Figure 12 diagramatically illustrates the (a) pipeline stages of a return from interrupt of a single repeat instruction in accordance with an embodiment of the invention, and (b) register contents corresponding to the pipeline stages of the return from interrupt; and

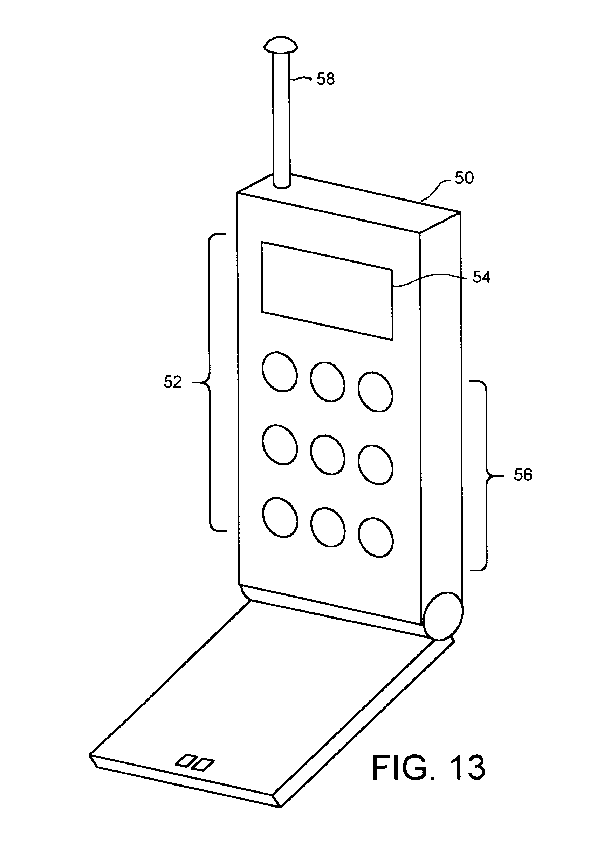

Figure 13 is a schematic illustration of a wireless communication device suitable for including an embodiment of the invention.

### DESCRIPTION OF PARTICULAR EMBODIMENTS

Although the invention finds particular application to Digital Signal Processors (DSPs), implemented for example in an Application Specific Integrated Circuit (ASIC) it also finds application to other forms of processing engines.

The basic architecture of an example of a processor according to the invention will now be described.

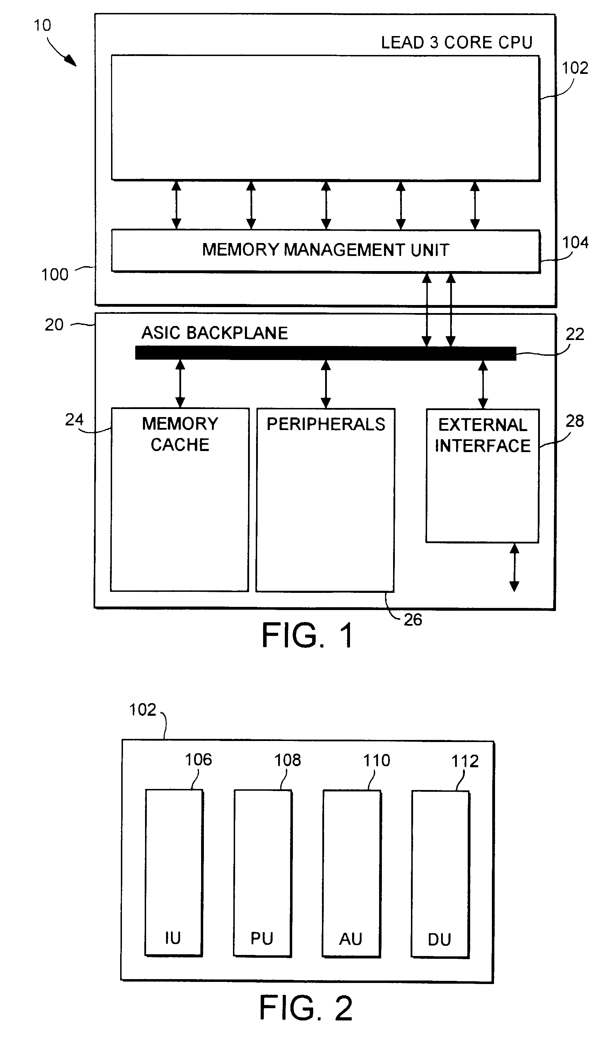

Figure 1 is a schematic overview of a processor 10 forming an exemplary embodiment of the present invention. The processor 10 includes a processing engine 100 and a processor backplane 20. In the present embodiment, the processor is a Digital Signal Processor 10 implemented in an Application Specific Integrated Circuit (ASIC).

As shown in Figure 1, the processing engine 100 forms a central processing unit (CPU) with a processing core 102 and a memory interface, or management, unit 104 for interfacing the processing core 102 with memory units external to the processor core 102.

The processor backplane 20 comprises a backplane bus 22, to which the memory management unit 104 of the processing engine is connected. Also connected to the backplane bus 22 is an instruction cache memory 24, peripheral devices 26 and an external interface 28.

It will be appreciated that in other embodiments, the invention could be implemented using different configurations and/or different technologies. For example, the processing engine 100 could form the processor 10, with the processor backplane 20 being separate therefrom, The processing engine 100 could, for example be a DSP separate from and mounted on a backplane 20 supporting a backplane bus 22, peripheral and external interfaces. The processing engine 100 could, for example, be a microprocessor rather than a DSP and could be implemented in technologies other than ASIC technology. The processing engine, or a processor including the processing engine, could be implemented in one or more integrated circuits.

Figure 2 illustrates the basic structure of an embodiment of the processing core 102. As illustrated, the processing core 102 includes four elements, namely an Instruction Buffer Unit (I Unit) 106 and three execution units. The execution units are a Program Flow Unit (P Unit) 108, Address Data Flow Unit (A Unit) 110 and a Data Computation Unit (D Unit) 112 for executing instructions decoded from the Instruction Buffer Unit (I Unit) 106 and for controlling and monitoring program flow.

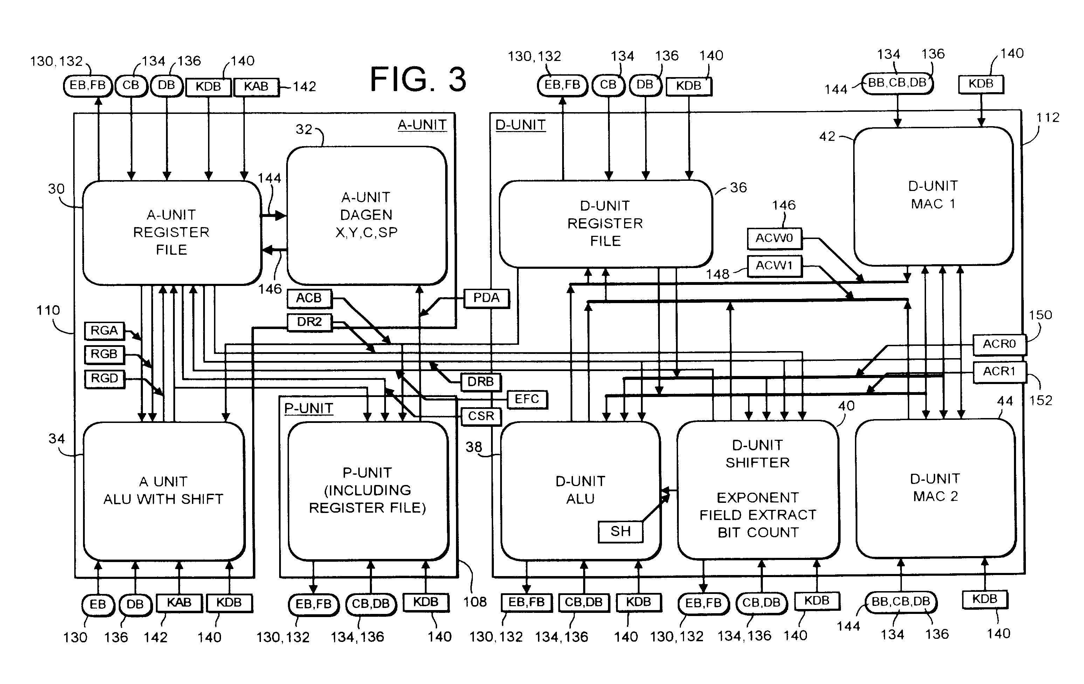

Figure 3 illustrates the P Unit 108, A Unit 110 and D Unit 112 of the processing core 102 in more detail and shows the bus structure connecting the various elements of the processing core 102. The P Unit 108 includes, for example, loop control circuitry, GoTo/Branch control circuitry and various registers for controlling and monitoring program flow such as repeat counter registers and interrupt mask, flag or vector registers. The P Unit 108 is coupled to general purpose Data Write busses (EB, FB) 130, 132, Data Read busses (CB, DB) 134, 136 and a coefficient program bus (BB) 138. Additionally, the P Unit 108 is coupled to sub-units within the A Unit 110 and D Unit 112 via various busses labeled CSR, ACB and RGD.

As illustrated in Figure 3, in the present embodiment the A Unit 110 includes a register file 30, a data address generation sub-unit (DAGEN) 32 and an Arithmetic and Logic Unit (ALU) 34. The A Unit register file 30 includes various registers, among which are 16 bit pointer registers (AR0, ..., AR7) and data registers (DR0, ..., DR3) which may also be used for data flow as well as address generation. Additionally, the register file includes 16 bit circular buffer registers and 7 bit data page registers. As well as the general purpose busses (EB, FB, CB, DB) 130, 132, 134, 136, a coefficient data bus 140 and a coefficient address bus 142 are coupled to the A Unit register file 30. The A Unit register file 30 is coupled to the A Unit DAGEN unit 32 by unidirectional busses 144 and 146 respectively operating in opposite directions. The DAGEN unit 32 includes 16 bit X/Y registers and coefficient and stack pointer registers, for example for controlling and monitoring address generation within the processing engine 100.

The A Unit 110 also comprises the ALU 34 which includes a shifter function as well as the functions typically associated with an ALU such as addition, subtraction, and AND, OR and XOR logical operators. The ALU 34 is also coupled to the general-purpose busses (EB, DB) 130, 136 and an instruction constant data bus (KDB) 140. The A Unit ALU is coupled to the P Unit 108 by a PDA bus for receiving register content from the P Unit 108 register file. The ALU 34 is also coupled to the A Unit register file 30 by busses RGA and RGB for receiving address and data register contents and by a bus RGD for forwarding address and data registers in the register file 30.

As illustrated, the D Unit 112 includes a D Unit register file 36, a D Unit ALU 38, a D Unit shifter 40 and two multiply and accumulate units (MAC1, MAC2) 42 and 44. The D Unit register file 36, D Unit ALU 38 and D Unit shifter 40 are coupled to busses (EB, FB, CB, DB and KDB) 130, 132, 134, 136 and 140, and the MAC units 42 and 44 are coupled to the busses (CB, DB, KDB) 134, 136, 140 and data read bus (BB) 144. The D Unit register file 36 includes 40-bit accumulators (AC0, ... AC3) and a 16-bit transition register. The D Unit 112 can also utilize the 16 bit pointer and data registers in the A Unit 110 as source or destination registers in addition to the 40-bit accumulators. The D Unit register file 36 receives data from the D Unit ALU 38 and MACs 1&2 42, 44 over accumulator write busses (ACW0, ACW1) 146, 148, and from the D Unit shifter 40 over accumulator write bus (ACW1) 148. Data is read from the D Unit register file accumulators to the D Unit ALU 38. D Unit shifter 40 and MACs 1&2 42, 44 over accumulator read busses (ACR0, ACR1) 150, 152. The D Unit ALU 38 and D Unit shifter 40 are also coupled to sub-units of the A Unit 108 via various busses labeled EFC, DRB, DR2 and ACB.

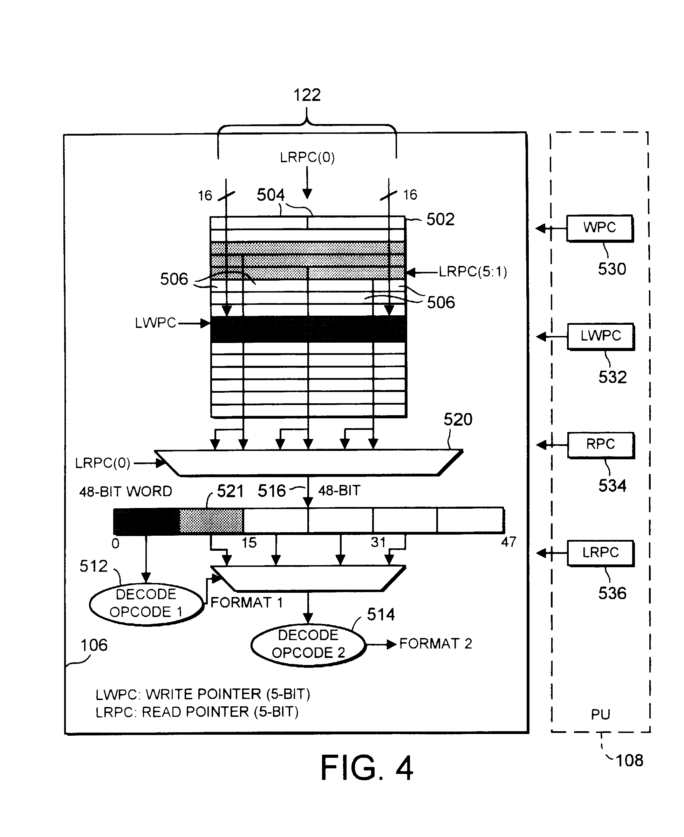

Referring now to Figure 4, there is illustrated an instruction buffer unit 106 comprising a 32 word instruction buffer queue (IBQ) 502. The IBQ 502 comprises 32×16 bit registers 504, logically divided into 8 bit bytes 506. Instructions arrive at the IBQ 502 via the 32-bit program bus (PB) 122. The instructions are fetched in a 32-bit cycle into the location pointed to by the Local Write Program Counter (LWPC) 532. The LWPC 532 is contained in a register located in the P Unit 108. The P Unit 108 also includes the Local Read Program Counter (LRPC) 536 register, and the Write Program Counter (WPC) 530 and Read Program Counter (RPC) 534 registers. LRPC 536 points to the location in the IBQ 502 of the next instruction or instructions to be loaded into the instruction decoder(s) 512 and 514. That is to say, the LRPC 534 points to the location in the IBQ 502 of the instruction currently being dispatched to the decoders 512, 514. The WPC points to the address in program memory of the start of the next 4 bytes of instruction code for the pipeline. For each fetch into the IBQ, the next 4 bytes from the program memory are fetched regardless of instruction boundaries. The RPC 534 points to the address in program memory of the instruction currently being dispatched to the decoder(s) 512 and 514.

The instructions are formed into a 48-bit word and are loaded into the instruction decoders 512, 514 over a 48-bit bus 516 via multiplexors 520 and 521. It will be apparent to a person of ordinary skill in the art that the instructions may be formed into words comprising other than 48-bits, and that the present invention is not limited to the specific embodiment described above.

The bus 516 can load a maximum of two instructions, one per decoder, during any one instruction cycle. The combination of instructions may be in any combination of formats, 8, 16, 24, 32, 40 and 48 bits, which will fit across the 48-bit bus. Decoder 1, 512, is loaded in preference to decoder 2, 514, if only one instruction can be loaded during a cycle. The respective instructions are then forwarded on to the respective function units in order to execute them and to access the data for which the instruction or operation is to be performed. Prior to being passed to the instruction decoders, the instructions are aligned on byte boundaries. The alignment is done based on the format derived for the previous instruction during decoding thereof. The multiplexing associated with the alignment of instructions with byte boundaries is performed in multiplexors 520 and 521.

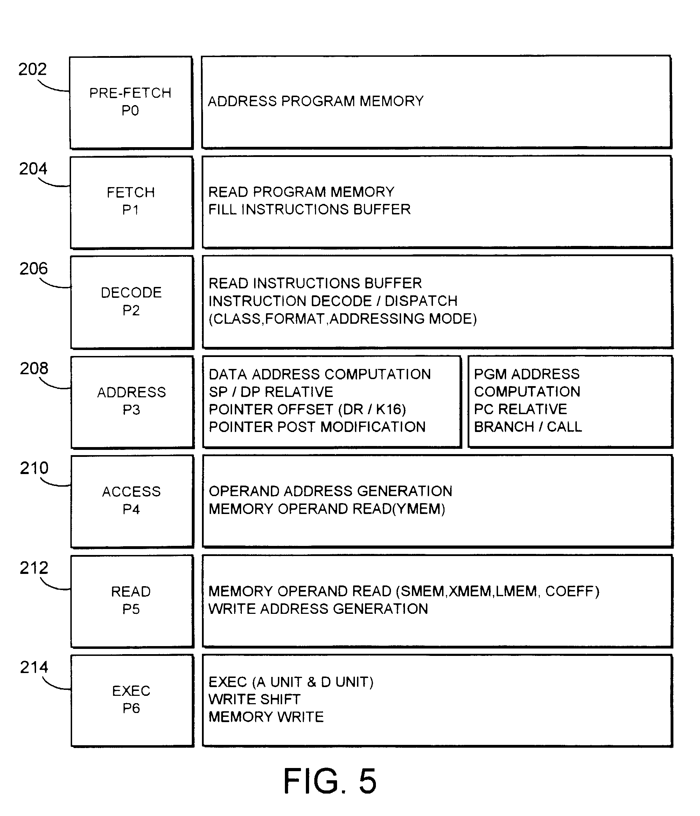

The processor core 102 executes instructions through a 7 stage pipeline, the respective stages of which will now be described with reference to Figure 5.

The first stage of the pipeline is a PRE-FETCH (P0) stage 202, during which stage a next program memory location is addressed by asserting an address on the address bus (PAB) 118 of a memory interface, or memory management unit 104.

In the next stage, FETCH(P1) stage 204, the program memory is read and the I Unit 106 is filled via the PB bus 122 from the memory management unit 104.

The PRE-FETCH and FETCH stages are separate from the rest of the pipeline stages in that the pipeline can be interrupted during the PRE-FETCH and FETCH stages to break the sequential program flow and point to other instructions in the program memory, for example for a Branch instruction.

The next instruction in the instruction buffer is then dispatched to the decoder/s 512/514 in the third stage, DECODE (P2) 206, where the instruction is decoded and dispatched to the execution unit for executing that instruction, for example to the P Unit 108, the A Unit 110 or the D Unit 112. The decode stage 206 includes decoding at least part of an instruction including a first part indicating the class of the instruction, a second part indicating the format of the instruction and a third part indicating an addressing mode for the instruction.

The next stage is an ADDRESS (P3) stage 208, in which the address of the data to be used in the instruction is computed, or a new program address is computed should the instruction require a program branch or jump. Respective computations take place in the A Unit 110 or the P Unit 108 respectively.

In an ACCESS (P4) stage 210 the address of a read operand is output and the memory operand, the address of which has been generated in a DAGEN X operator with an Xmem indirect addressing mode, is then READ from indirectly addressed X memory (Xmem).

The next stage of the pipeline is the READ (P5) stage 212 in which a memory operand, the address of which has been generated in a DAGEN Y operator with an Ymem indirect addressing mode or in a DAGEN C operator with coefficient address mode, is READ. The address of the memory location to which the result of the instruction is to be written is output.

In the case of dual access, read operands can also be generated in the Y path, and write operands in the X path.

Finally, there is an execution EXEC (P6) stage 214 in which the instruction is executed in either the A Unit 110 or the D Unit 112. The result is then stored in a data register or accumulator, or written to memory for Read/Modify/Write or store instructions. Additionally, shift operations are performed on data in accumulators during the EXEC stage.

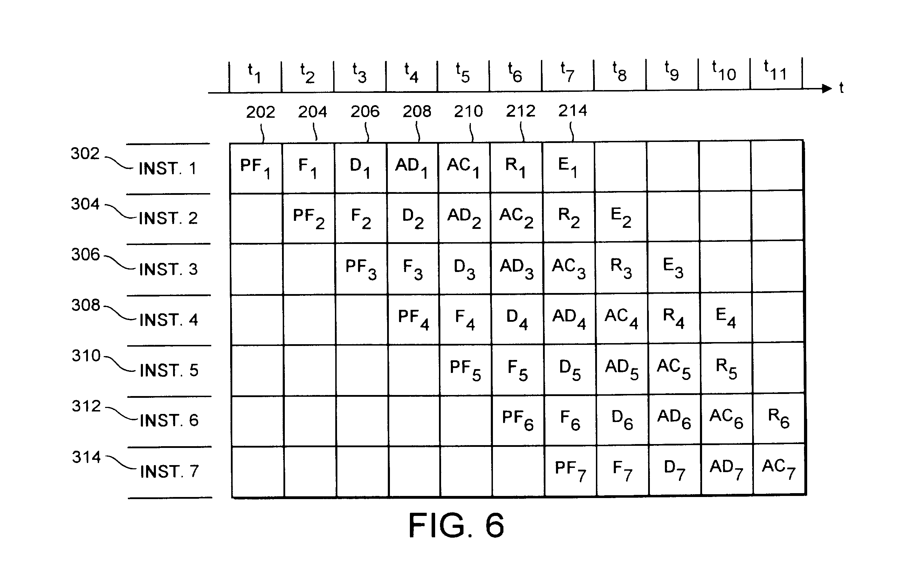

The basic principle of operation for a pipeline processor will now be described with reference to Figure 6. As can be seen from Figure 6, for a first instruction 302, the successive pipeline stages take place over time periods T₁-T₇. Each time period is a clock cycle for the processor machine clock. A second instruction 304, can enter the pipeline in period T₂, since the previous instruction has now moved on to the next pipeline stage. For instruction 3, 306, the PRE-FETCH stage 202 occurs in time period T₃. As can be seen from Figure 6 for a seven stage pipeline a total of 7 instructions may be processed simultaneously. For all 7 instructions 302-314, Figure 6 shows them all under process in time period T₇. Such a structure adds a form of parallelism to the processing of instructions.

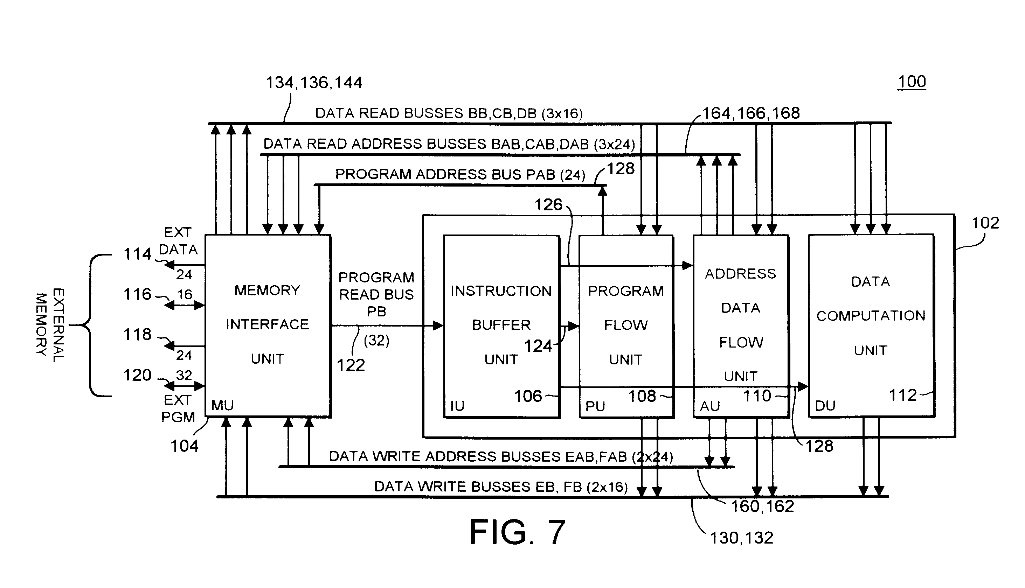

As shown in Figure 7, the present embodiment of the invention includes a memory management unit 104 which is coupled to external memory units via a 24 bit address bus 114 and a bi-directional 16 bit data bus 116. Additionally, the memory management unit 104 is coupled to program storage memory (not shown) via a 24 bit address bus 118 and a 32 bit bi-directional data bus 120. The memory management unit 104 is also coupled to the I Unit 106 of the machine processor core 102 via a 32 bit program read bus (PB) 122. The P Unit 108, A Unit 110 and D Unit 112 are coupled to the memory management unit 104 via data read and data write busses and corresponding address busses. The P Unit 108 is further coupled to a program address bus 128.

More particularly, the P Unit 108 is coupled to the memory management unit 104 by a 24 bit program address bus 128, the two 16 bit data write busses (EB, FB) 130, 132, and the two 16 bit data read busses (CB, DB) 134, 136. The A Unit 110 is coupled to the memory management unit 104 via two 24 bit data write address busses (EAB, FAB) 160, 162, the two 16 bit data write busses (EB, FB) 130, 132, the three data read address busses (BAB, CAB, DAB) 164, 166, 168 and the two 16 bit data read busses (CB, DB) 134, 136. The D Unit 112 is coupled to the memory management unit 104 via the two data write busses (EB, FB) 130, 132 and three data read busses (BB, CB, DB) 144, 134, 136.

Figure 7 represents the passing of instructions front the I Unit 106 to the P Unit 108 at 124, for forwarding branch instructions for example. Additionally, Figure 7 represents the passing of data from the I Unit 106 to the A Unit 110 and the D Unit 112 at 126 and 128 respectively.

By way of background example, a known processing engine will now be described. The processing engine comprises a program memory 802 for storing instructions for execution by the processing engine. The instructions are stored at addressable locations 804 in the program memory 802. The program memory 802 is addressed over a Program Address Bus (PAB) 806. Instructions at locations 804 addressed over the PAB 806 are placed on the Program Bus (PB) 808. The addresses for the program memory 802 are asserted on the PAB 806 from a program counter 810. The program counter 810 is initiated with the address of the first instruction for a program stored in the program memory 802, and then generally increases sequentially to address the instructions in the program memory forwarding to functional units of the processing engine for execution.

The program counter 810 also "points" to an instruction in program memory 802 placed on the PB 808 as shown by dotted arrow 812. Thus, by inspection of the program counter 810 it is possible to determine from which addressable location 804 a next instruction for the functional units of the processing engine will originate.

Instructions from the PB 808 are loaded into an Instruction Register 814 pending decode thereof by a Decoder 816. Decoded instructions are forwarded from the Decoder 816 to Execution Units 818.

During execution of program instructions by the processing engine, it is possible that an instruction to repeat a following single instruction will be received and executed by the processing engine. Such an instruction will "freeze" the program counter 810 at the address of the single instruction, so that the program counter points to the location of that instruction for the duration of the repeat. Thus that single instruction will be placed on PB 808 for each processor cycle, and repeatedly decoded and executed. Such repeating is known as single instruction looping.

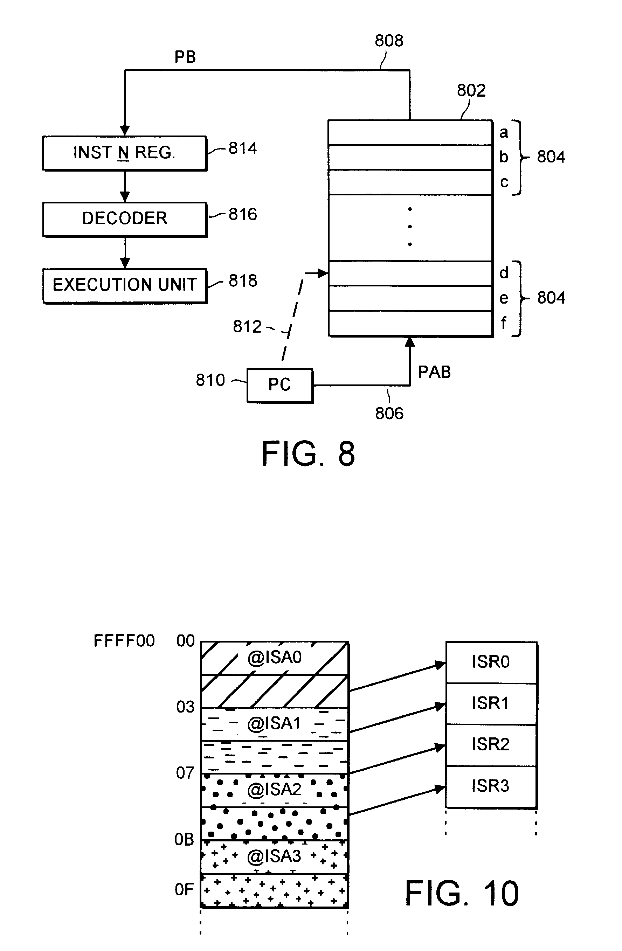

An example of known processing engine configured to perform single instruction repeat loops will now be described with reference to Fig 8.

In known processing engine, the instruction register is relatively small, for example 16 bits long in the Texas Instruments TMS 320C54X DSP integrated circuit chip. Consequently, long instruction words comprising more than 16 bits, typically requiring more than one processor cycle to load them into the instruction register 814, decode them in the decoder 816, and execute them 818, are split in order to fit into the instruction register 814. Accordingly, respective parts of a long multi-cycle instruction word are decoded and executed separately. During sequential program flow decoding and executing of long instruction words via the 16 bit register occurs without undue problems. This is even the case when a single instruction repeat loop comprises a long multi-instructional word.

It is desirable during operation of processing engine to interrupt a repeat loop, for example when the processing engine receives an interrupt request from peripheral apparatus or in respect of a bus error. Since a long instruction word is split into parts for decoding and execution due to the limited size of the instruction register, it is necessary to save a great deal of context information in order for the program flow, i.e. single instruction repeat, to return to the correct part of the long multi-cycle instruction on return from the interrupt sub-routine when the interrupt has been serviced. Consequently, for known processing engine interruption of single word repeat loops is not supported, even for sixteen bit instruction words which would wholly fit within the instruction buffer. This is in order to reduce complexity and programming rules for the processing engine.

Not supporting the interruption of single instruction repeat loops has further drawbacks. Since failure to service interrupt requests within a defined latency period may result in a catastrophic failure of the processing engine, or any system in which the processing engine resides, it is necessary to ensure that any single instruction repeat loop is broken after a certain number of instructions, for example 20, 50 or 100 repeats, in order to allow for the servicing of any interrupt request that may have occurred during the repeat loop. The repeat loop can then be continued once the pause to service any interrupt requests, and any interrupt requests have been serviced, is over. This puts a further processing overhead on the processing engine, or upon a programmer for the processing engine to ensure that such breaks are included in single instruction repeat loops.

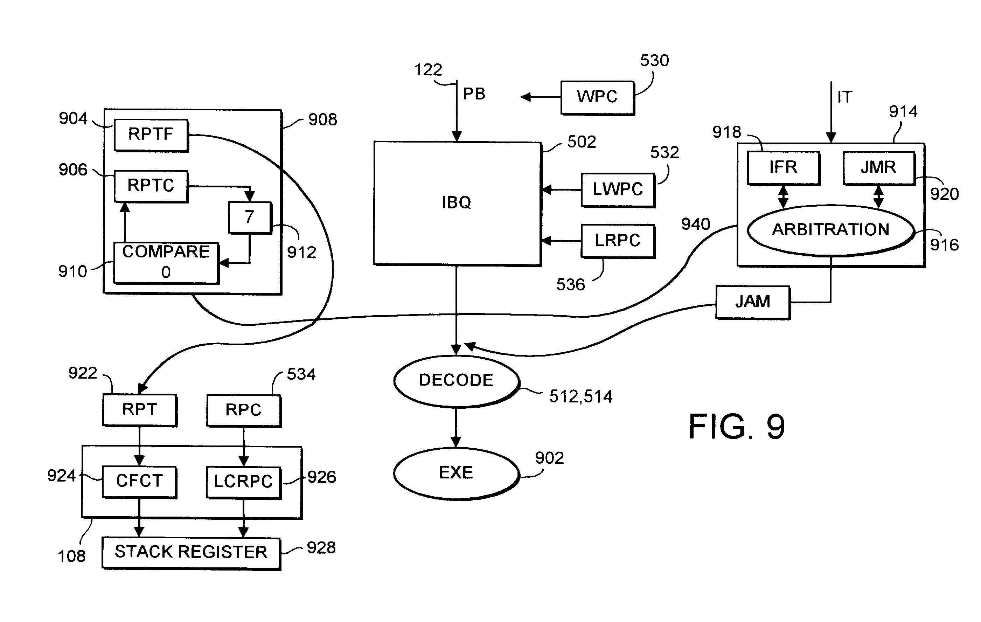

A preferred embodiment of the invention will now be described with reference to Fig. 9.

An instruction buffer queue (IBQ) 502 is shown having instructions input thereto via program bus 122. Instruction code from the program bus 122 are written into the IBQ 502 at locations pointed to by LWPC 532. Instructions at locations pointed to by LRPC 536 are loaded from IBQ 502 into multiplexors 520,521 described with reference to Fig. 4. A long instruction such as a 48 bit instruction can be extracted from the IBQ 502 and may comprise whole or complete multi-cycle instruction words such as parallel operable instruction words, memory read/write instructions where data is read on a first cycle and a computation and data write takes place on a second cycle, and single memory instructions with a large offset for example. The IBQ 502 therefore acts as a kind of instruction decode register for that long instruction for example. Instruction words from the multiplexors 520/521 are decoded in decoders 512 and/or 514 and the decoded instructions forwarded to appropriate execution units 902, such as the P Unit 108, A Unit 110 and D Unit 112 described above with reference to Figs 2, 3 and 7.

In response to the execution of an instruction for repeating a single instruction, a so-called "single-repeat" instruction, a flag in a Repeat Flag Register (RPTF) 904 is set. Additionally, the Repeat Count Register (RPTC) 906 is initialised and loaded with the initial repeat count value i.e. the number of repeats to be performed. The single-repeat instruction includes the initial repeat count value, and the RPTF 904 and RPTC 906 are located in a repeat loop controller 908. The repeat loop controller 908 also includes compare logic 910, which compares the value in RPTC 906 with zero, and decrement logic 912 for decrementing the value held in RPTC 906 for the value not being equal to zero.

Whilst the repeat flag is set, LRPC 536 and RPC 534 are not updated. Thus, the instruction at the location in the IBQ 502 pointed to by LRPC 536, and having a program memory location pointed to by RPC 534, is repeatedly forwarded to the multiplexors 520/521 for decode and subsequently through the rest of the processor pipeline stages for each repeat. During the decode stage, P2 referring to Figure 5, for the repeated instruction the value stored in RPTC 906 is decremented by 1. As described above, once an instruction has entered the decode stage it has to continue through the rest of the pipeline stages and be fully executed. The decremented value is compared in compare logic 910 and the repeat flag is updated for the decremented value not equal to zero.

Whilst the repeat flag is set and LRPC and RPC are frozen, instructions can be accumulated within the IBQ 502, for subsequent execution once the repeat loop has been completed. This aspect of the preferred embodiment advantageously reduces delay in executing instructions following the repeated single instructions since they have already been fetched ("pre-fetch") into the IQB 502 from program memory, and allows greater parallelism of instructions after the repeat.

The preferred embodiment also includes interrupt management logic 914. Interrupts, IT, received by the processing engine are routed to the interrupt management logic 914. The interrupt management logic 914 includes an arbitration unit 916 which determines the priority of interrupts when more than one interrupt is received. For each interrupt an appropriate flag in the interrupt flag register 918 is set, which although logically is part of the interrupt management logic is physically located in the P Unit 108 in the preferred embodiment. The interrupt management logic 914 also comprises a single bit Jam Register (JMR) 920.

On the processor cycle following receipt of an interrupt or interrupts the appropriate interrupt flag (IFR) 918 is set, and if the interrupt global mask is enabled i.e. servicing of interrupts is enabled, the JAM bit in the JMR 920 is set. Setting the JAM bit causes the dispatch of instructions to the decoder 512, 514 to be disabled. The interrupt control logic 914 takes control and stops the repeat loop, shown 940 in Fig. 9. Loop information, shown collectively as RPT 922 and including the repeat flag RPTF 904 and other context information, is saved to the Context Flow Control Register (CFCT) 924 located in the P Unit 108. RPTC 906 is a memory mapped register and hence the current value may be stored in memory.

The RPC 534 is saved to the Local Copy Read Program Counter (LCRPC) 926. Both CFCT 924 and LCRPC 926 serve to pipeline the context information and RPC to the stack register 928. In a preferred embodiment of the invention, the size of the context information and program counter address are limited to a total of 32 bits in order to provide for a single cycle save, since the databus is 32 bus wide.

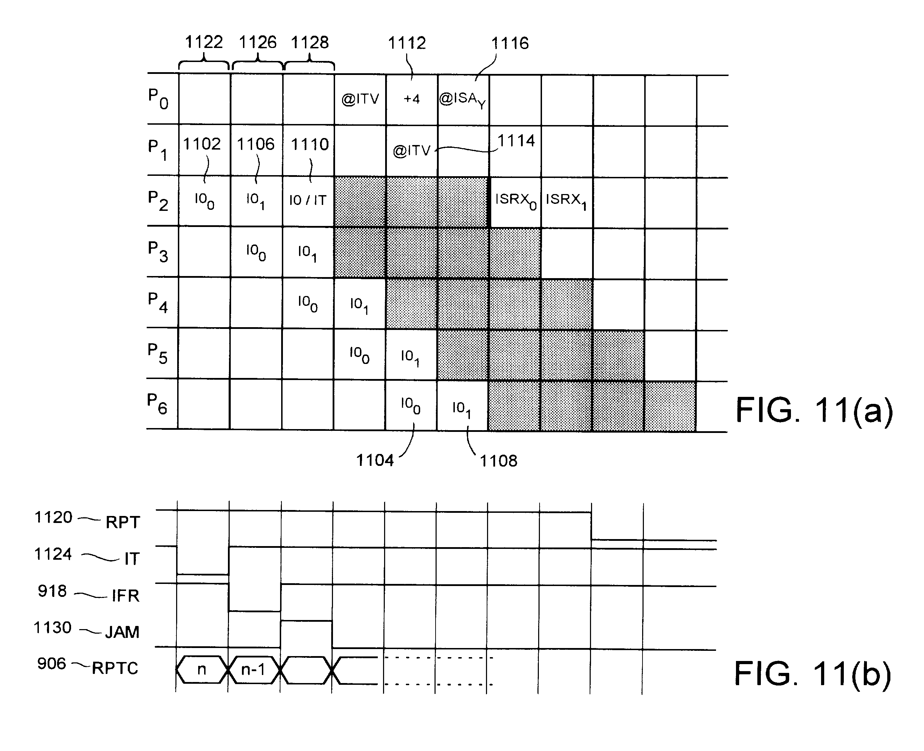

Once the repeat flag has been saved it is cleared by the interrupt control logic 914. Thus, RPC 534 and LRPC 536 are free. Once the JAM bit is set in JMR 920, the interrupt management logic 914 sets the WPC 530 to the interrupt vector. The interrupt vector is exported directly to the program address bus PAB 128 and addresses an area (interrupt vectot table) of program memory, for example starting at FFFF0̸0̸, which contains interrupt sub-routine addresses as shown in Fig 10. The interrupt sub-routine addresses @ ISA0̸...3 respectively point to further areas of program memory containing the interrupt sub-routines ISR0̸...3. Thus, the interrupt vector address, resulting from the interrupt priority arbitration, causes the start address of a corresponding interrupt sub-routine to be asserted on the PAB 128, and in WPC. The sub-routine instructions are then loaded into the IBQ 502 and enter the processor pipeline in the normal way for servicing the interrupt.

On completion of the interrupt sub-routine, the repeat flag is restored from the stack 928 via CFCT 924 to RPTF 904. This enables the repeat count circuitry. Due to memory access taking more than one processor cycle, the current repeat counter value is restored from memory to RPTC 906 prior to the return from interrupt. On the return from interrupt the LRPC 536 is frozen and the WPC 530 and RPC 534 are restored from LCRPC 926. The contents of RPC and the single instruction to be repeated is fetched from program memory to the IBQ 502 and to the multiplexors 520/521. Repeat of the single instruction, and fetch advance of subsequent instructions, then continues as before the interrupt.

The flow of instructions through a processing pipeline in accordance with the preferred embodiment of the invention will now be described with reference to Fig.11(a). The pipeline stages shown in Fig.11(a) will be referred to using the same nomenclature as used in Fig.5, namely P0̸ is the pre-fetch stage, P1 is the fetch stage, P2 is the decode stage, P3 is the address stage, P4 is the access stage, P5 is the read stage and P6 is the execute stage.

A single repeated instruction I0̸_{0̸} is shown 1102 in the decode stage P2 of the processor pipeline and proceeds down the pipeline to the execute stage P6 1104. The single repeated instruction undergoes the next repeat, I0̸₁, starting in the decode stage 1106 and proceeding to the execute stage 1108. At some point after an interrupt occurs the dispatch from the decoder is disabled, shown I0̸/IT 1110 in the pipeline grid of Fig.11.

In the next processor cycle following disabling of the dispatch the interrupt vector address, @ ITV, is placed directly on the PAB 128 in the pre-fetch stage 1112 of the processor pipeline. In the fetch stage, 1114, the contents of the address @ITV are read, which are the interrupt sub-routine address @ISA, and asserted on PAB 128 in the next processor cycle 1116. The first instruction, ISRX_{0̸} , for the sub-routine located at @ISAX is transferred directly to the decode stage 1118 of the processor pipeline. Subsequently, the next instruction ISRX₁ for the interrupt sub-routine enters the pipeline, and execution of the sub-routine continues in a conventional manner. On the return from interrupt, the repeat of the single instruction is restarted.

Fig 11(b) shows the respective signals and operations relative to the processor cycles and the instruction pipeline shown in Fig 11(a).

The single instruction repeat is active as shown by 1120. In processor cycle 1122 an interrupt, IT 1124, which is active low, is received by the processing engine. On the following cycle, 1126, the appropriate interrupt flag is set in the IFR 918, and on the subsequent cycle, 1128, the JAM bit 1130 is set and the dispatch disabled. The RPTC 906 is decremented for each decode of I0̸ in cycles 1122 and 1126, but is inhibited and frozen once the dispatch is disabled in cycle 1128. However, if the ISR is utilising a repeat loop then the contents of RPTC must be stored under control of user coded software for the ISR.

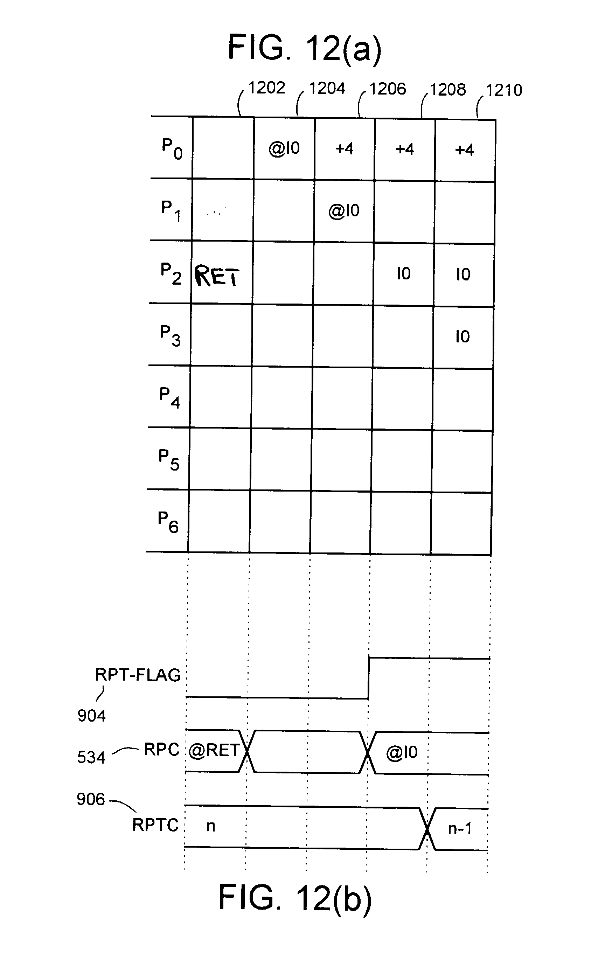

The flow of instructions through a processing pipeline for areturn from interrupt in accordance with the preferred embodiment of the invention will now be described with reference to Fig.12. The pipeline stages shown in Fig.12(a) will be referred to using the same nomenclature as used in Fig.5 and with reference to Fig. 11 above.

In processor cycle 1202 a return from interrupt instruction (RET) is decoded in the decode stage P2 of the pipeline, and RPC 534 contains the program memory address of the RET instruction. The RET instruction causes WPC 530 to be loaded with the program memory address of the interrupted single repeated instruction @I0̸ from LCRPC 926 such that for the next processor cycle 1204 the pre-fetch stage P0 of the pipeline accesses program memory address @I0̸. For the following processor cycle 1206, the instruction I0̸ is placed on the PB 122 in the Fetch stage P1 and on the subsequent cycle 1208 the instruction is decoded in the decode stage P2 of the pipeline. During the decode stage P2, RPC 534 is updated with the program memory address @I0̸, and the repeat flag is set in the RPTF register 904 having been restored from the CFCT register 924. As referred to above, the current count value is restored to the RPTC register 906 prior to the return from interrupt, and during the access stage P3 of the pipeline the RPTC 906 value is decremented. For the decode stage P2 of the first pass of the repeated single instruction after the return from interrupt. The RPC 534 value is now frozen for the remainder of the repeat, and the repeat single instruction continues as before.

An advantage of the preferred embodiment of the invention is that single instruction repeat loops can be interrupted without the need for storing large amounts of context information in order to coherently return from an interrupt sub-routine. Thus, there is no need to limit repeat loop sizes in order to provide opportunity for the processing engine to service interrupts, and interrupt latency is improved.

Embodiments of the invention are suitable for wireless communication devices such as a radio telephone 50 illustrated in Fig. 12. Such a radio telephone 50 comprises a user interface 52 including a display 54 such as a liquid crystal display, and a key pad 56. The radio telephone also includes a transceiver, not shown, and an antenna 58.

In view of the foregoing description it will be evident to a person skilled in the art that various modifications may be made within the scope of the invention. For example, a bit may be set in the decode mechanism having an active state indicating that the decode mechanism is disabled.

The scope of the present disclosure includes any novel feature or combination of features disclosed therein either explicitly or implicitly or any generalisation thereof irrespective of whether or not it relates to the claimed invention or mitigates any or all of the problems addressed by the present invention. The applicant hereby gives notice that new claims may be formulated to such features during the prosecution of this application or of any such further application derived therefrom. In particular, with reference to the appended claims, features from dependent claims may be combined with those of the independent claims and features of respective independent claims may be combined in any appropriate manner and not merely in the specific combinations enumerated in the claims.

## Claims

**1.** A processing engine, comprising an instruction decode register adapted to buffer a complete instruction pending decode thereof, and a decode mechanism configured to decode instructions, said processing engine responsive to a repeat instruction to repeat execution of a subsequent instruction and further responsive to a signal to interrupt said repeat execution of said subsequent instruction.

**2.** A processing engine according to claim 1, further responsive to said signal to disable said decode mechanism.

**3.** A processing engine according to claim 2, the decode mechanism configurable to complete a current decode operation prior to disablement.

**4.** A processing engine according to claim 2 or claim 3, and further comprising an instruction pipeline including a plurality of pipeline stages, said processing engine configurable to disable said decode mechanism during a decode stage of said instruction pipeline.

**5.** A processing engine according to any of claims 2 to 4, responsive to a decode flag in said decode mechanism to disable said decode mechanism.

**6.** A processing engine according to any of claims 2 to 4, responsive to a signal to inhibit dispatch of an instruction to said decode mechanism.

**7.** A processing engine according to any of claims 1 to 6, further comprising a program counter for pointing to a program memory location corresponding to said subsequent instruction, and a memory for storing a value for said program counter during said interrupt.

**8.** A processing engine according to claim 7, configurable to freeze said program counter for said repeat execution of said subsequent instruction.

**9.** A processing engine according to any of claims 1 to 8, configurable for storing context information associated with said second instruction in said memory.

**10.** A processing engine, according to any of claims 7 to 9, wherein said memory comprises a register.

**11.** A processing engine according to any preceding claim, further comprising an interrupt control mechanism responsive to an interrupt request signal to initiate said signal to interrupt said repeat execution.

**12.** A processing engine according to claim 11, wherein said interrupt control mechanism is responsive to said interrupt request to set an interrupt flag.

**13.** A processing engine according to claim 11 or claim 12, said interrupt control mechanism responsive to said interrupt request signal to initiate an interrupt service routine for determining the nature of said interrupt and calling a corresponding program sub-routine.

**14.** A processing engine according to any preceding claim, wherein said instruction decode register is adapted to buffer instructions having a bit length from a range, 8, 16, 24, 32, 40 and 48 bits.

**15.** A processing engine according to claim 14, wherein said instruction decode register is adapted to buffer multi-cycle instructions and/or an instruction pair.

**16.** A processing engine according to claim 7 or 8 or any preceding claim dependent on claim 7 or 8, responsive to an end of said interrupt to restore said program counter value to said program counter from said memory.

**17.** Processing engine according to claim 16, responsive to transfer said second instruction to said instruction decode register in accordance with said program counter value.

**18.** A processing engine according to claim 16 or 17, further comprising a further program counter for pointing to a location in program memory corresponding to an instruction for transfer to said instruction decode register, the processing engine responsive to said end of said interrupt to load said further program counter with a value corresponding to said program counter value for transferring said second instruction from program memory to said instruction decode register.

**19.** A processing engine according to any preceding claim and configured for context data and program counter data bit total to not greater than the bit size of a stack registerfor the processing engine.

**20.** A processor comprising a processing engine according to any of claims 1 to 19.

**21.** An integrated circuit comprising a processing engine according to any of claims 1 to 19.

**22.** A digital signal processor comprising a processing engine according to any of claims 1 to 19.

**23.** An integrated circuit comprising a digital signal processor according to claim 22.

**24.** A method for operating a processing engine including an instruction decode register, the method comprising
(i) repeatedly executing an instruction wholly disposed in said instruction decode register,
(ii) interrupting said repeated execution,
(iii) loading said instruction decode register with another instruction, and
(iv) executing said another instruction.

**25.** A method according to claim 24, step (i) further comprising the steps of
(v) decoding said instruction, and
(vi) dispatching said decoded instruction for executing.

**26.** A method according to claim 25, further comprising disabling said decoding for interrupting said repeated execution.

**27.** A method according to claim 26, further comprising completing a current decoding operation prior to disabling said decoding.

**28.** A method according to any one of claims 24 to 27, further comprising storing a program memory address for said instruction during said interrupting said repeated execution.

**29.** A method according to any one of claims 24 to 28, further comprising storing data associated with said repeated execution of said instruction during said interrupting of said repeated execution.

**30.** A method according to any one of claims 24 to 29, step (ii) further comprising noting and identifying an interrupt type.

**31.** A method according to claim 30, wherein said another instruction comprises a program sub-routine corresponding to said type of interrupt.

**32.** A method according to any of claims 24 to 31, further comprising restoring said instruction to said instruction decode register for an end of said interrupting said repeated execution.

**33.** A telecommunications device comprising a digital signal processor according to claim 22.

**34.** A telecommunications device operable in accordance with a method according to any of claims 24 to 32.

**34.** A wireless communication device comprising a telecommunication device according to claim 33 or claim 34, a user interface including a display, a keypad or keyboard for inputting data to the communications device, a transceiver and an antenna.
